# EUROPEAN PATENT APPLICATION

(11) **EP 3 666 081 A1**
(43) Date of publication of application: **17.06.2020**
(21) Application number: 19215542.2
(22) Date of filing: 12.12.2019
(51) Int. Cl.: A23C 11/10, A23L 7/104, A23L 11/00

(54) **A METHOD FOR MANUFACTURING A DAIRY-FREE, FERMENTED DESSERT AND THE DESSERT ITSELF**

(30) Priority: 12.12.2018 BE 201805882
(71) Applicant: Limelco NV, 3520 Zonhoven (BE)
(72) Inventor: NIJS, Nathalie, 3668 Niel-Bij-As (BE)
(74) Representative: Brantsandpatents bvba

(57) **Abstract**

The present invention relates to a method for the production of a diary-free fermented desert, wherein the desert is produced based on a diary-free alternative for milk, and the method comprises the homogenisation, the thermisation and the fermentation of the diary-free alternative, wherein the thermisation is a two-step treatment, wherein, in a first step, the dairy-free alternative is heated to a temperature which is minimal 95°C, and in a second step, is cooled to a minimum temperature of 30°C. The present invention also relates to a diary-free, fermented desert based on a diary-free alternative for milk, wherein the desert is composed of the dairy-free alternative for at least 14% and wherein the pH is comprised between 4.1 and 4.8.

## Description

### TECHNICAL DOMAIN

The invention relates to a method for fabricating a diary-free, fermented desert. In a second aspect, the invention also relates to the diary-free, fermented desert itself.

### STATE OF THE ART

Fermented deserts, such as yoghurt, curd cheese or soft curd cheese, and methods for producing these deserts are known in the state of the art.

BE 1 013 095 describes a method for preparing a soft curd cheese based on a 'sweet" buttermilk. This method however results in a fresh cheese with a still granular structure, giving an unpleasant feeling in the mouth.

EP 1 033 917 also discloses a method for preparing a fresh cheese wherein milk and milk derivatives are used. EP '917 further describes the addition of vegetable fats to milk for obtaining a fresh cheese with a smooth structure. In addition, this also results in a desert with an increased calorific value, which is disadvantageous for the health aspects of the product.

Moreover, the described documents use a diary product, of animal origin for producing the fermented desert, which is not appropriate for every consumer. The increasing number of intolerances and allergies to cows' milk and milk of animal origin has led to new developments in the food industry, namely the provision of diary-free alternatives for milk, such as for example soymilk. The diary-free alternatives are generally sought after by the consumer group, in particular by those who are allergic to cows' milk, who are intolerant to lactose and who avoid animal products for ethic reasons or health reasons.

US 395 054 4 describes a method for the production of a diary-free yoghurt based on soybeans. Soybeans are a complete alternative for the production of animal origin; however, they can come from genetically modified plants. An important argument for the consumer for not choosing this product.

Rajapaksa (2005) discusses the production of coconut yoghurt and soymilk-coconut yoghurt. Both yoghurts are supplemented with an amount of skimmed milk powder. The addition of such a diary product is limiting for those having a lactose intolerance.

CN 102 948 486 relates to the fermentation of soymilk by means of lactic acid bacteria. CN '486 hereby also mentions that no milk powder and other energetic substances are added to the soymilk for the fermentation of the lactic acid bacteria. However, the lactic acid bacteria are first activated in skimmed milk and transferred to the soymilk which needs fermentation. Cn '486 also uses a diary product in the process, making the product inappropriate for persons having a lactose intolerance.

CN 102 813 004 discusses the use of soymilk. However, for the production of a beverage and not a yoghurt based on soymilk. Consequently, the process is different as well as the texture of the product which has to be obtained.

CN 105 211 307 describes a method for the production of a fermented soymilk, more in particular a fermented soymilk of the type of fruit and vegetable juices. D4 changes the taste and nutritional value of the fermented soymilk by using fruit and vegetable juices.

EP 3 375 293 relates to a food product based on vegetable milk and the process of preparing it.

EP 1 035 777 discusses a diary-free yoghurt of starting material sterilized by overheating, comprising soy and oat/almond/rice, wherein different lactic acid bacteria are used. DE 20 2007 017 700 discusses a cashew nut-soy milk yoghurt. Edam et al. 2016 and Yaakob et al. 2012 disclose coconut yoghurt products.

The present invention aims to find at least a solution for some of the above-mentioned problems or disadvantages. The aim of the invention is to provide a method resolving these disadvantages.

### SUMMARY OF THE INVENTION

In a first aspect, the present invention relates to a method for the production of a diary-free, fermented desert of claim 1.

Preferred embodiments of the device are illustrated in claims 2 to 12.

In a second aspect, the present invention relates to a diary-free, fermented desert of claim 13. Preferred embodiments of the desert are described in the dependant claims 14 to 16.

### DETAILED DESCRIPTION

The present invention provides a method for fabricating a diary-free, fermented desert. The two-step treatment according to the present invention during thermization of the diary-free alternative on the one hand leads to an increased shelf life of the cooled desert and on the other hand contributes to the strong and soft flavour, and the smooth and solid structure of the desert.

Unless otherwise specified, all terms used in the description of the invention, including technical and scientific terms, shall have the meaning as they are generally understood by the worker in the technical field of the invention. For a better understanding of the description of the invention, the following terms are explained specifically.

"A", "an" and "the" refer in the document to both the singular and the plural form unless clearly understood differently in the context. "A segment" means for example one or more than one segment.

When "approximately" or "about" are used in the document together with a measurable quantity, a parameter, a period or moment, etc., variations of +/-20% or less, preferably +/-10% or less, more preferably +/-5% or less, still more preferably +/-1% or less, and even still more preferably +/-0.1% or less than and of the cited value are meant, as far as such variations apply to the invention that is described. It will however be clearly understood that the value of the quantity at which the term "approximately" or "about" is used, is itself specified.

The terms "include", "including", "consist", "consisting", "provide with", "contain", "containing", "comprise", "comprising" are synonyms and are inclusive of open terms that indicate the presence of what follows, and that do not exclude or prevent the presence of other components, characteristics, elements, members, steps, known from or described in the state of the art.

The citation of numeric intervals by means of end points includes all integers, fractions and/or real numbers between the end points, including these end points.

In a first aspect, the invention relates to a method for the production of a diary-free fermented desert, wherein the desert is produced based on a diary-free alternative for milk, and the method comprises the homogenisation, the thermisation and the fermentation of the diary-free alternative, wherein the thermisation is a two-step treatment, wherein, in a first step, the dairy-free alternative is heated to a temperature which is minimal 95°C, and in a second step, is cooled to a minimum temperature of 30°C.

In a preferred embodiment, the diary-free alternative is heated, in the first step, to a temperature which is minimum 90°C, more preferably heated to a temperature comprised between 90 and 99°C, more preferably heated to a temperature comprised between 95 and 99°C, more preferably heated to a temperature comprised between 92 and 96°C. In a further preferred embodiment, the diary-free alternative is cooled, in the second step, to a temperature between 30 and 50°C.

According to the present invention, the method comprises a thermisation step with an efficient and short heat treatment, which is immediately followed by a fast cooling. Preferably, the temperature of the cooled product is comprised between 30°C and 50°C. The succession of short heating and cooling on the one hand guarantees the microbiological value and on the other hand the maintenance of the texture of the desert.

Methods for the production of fermented deserts based on milk are known in the state of the art. The method of the present invention comprises the processing of diary-free alternatives for milk. Milk has specific physicochemical characteristics influencing the characteristics of the desert fabricated therefrom, based on which the different techniques in the state of the art are developed. However, diary-free alternatives for milk do not have the same physicochemical characteristics as milk and the optimization of the method is necessary for obtaining a diary-free, fermented desert based on a diary-free alternative for milk, also having a good quality. The method of the present invention results in a qualitative smooth diary-free, fermented desert. The soft, smooth texture is found pleasant by the consumer, contrary to a granular structure which is obtained by the other methods known in the state of the art.

According to an embodiment, the thermisation is executed in 12 to 300 s.

The possible presence of pathogens in raw milk is linked to the health of the animal and the hygiene when milking the cow, in case of raw cows' milk. Diary-free alternatives for milk generally comprise a water extraction of a fruit. When fabricating this extract, the microbiologic directives are always respected. Consequently, it is sufficient to realize a short thermisation in 12 to 300 s. As a result, the method has the advantage that several alternatives for milk according to the present method can be processed into a diary-free, fermented desert. Depending on the used diary-free alternative, the duration of the thermisation is different, but always with maintenance of the quality.

According to a method, the thermisation is executed before the fermentation.

The method of the present invention allows to start the fermentation, after the thermisation. The temperature after the thermisation is appropriate for adding a ferment and starting the fermentation. This method has the advantage that the bacteria which are present in the ferment are not inactivated by a heat treatment. A diary-free, fermented desert with living and active cultures is desired by some consumers, since it offers a lot of health advantages, such as for example the reduction of digestion problems.

According to another embodiment, the fermentation is executed before the thermisation. The full inactivation of the ferment by the heat treatment is desired by some consumers having a low resistance.

According to a preferred embodiment, the temperature of the two-step treatment in the first step is comprised between 90 en 99°C, more in particular between 95°C and 99°C, and in the second step comprised between 30 and 50°C.

Preferably, the first step is executed at a temperature comprised between 92 and 96°C, wherein pathogenic micro-organisms are inactivated. Preferably, the second step is executed at a temperature comprised between 32 and 45°C, more preferably at a temperature comprised between 33 and 40°C, most preferably at a temperature comprised between 34 and 38°C. The second step stabilizes the products and avoids modification of the organoleptic characteristics of the diary-free alternative and the too early coagulation of the present proteins.

According to an embodiment, the homogenisation is executed at a pressure comprised between 65 and 180 bar, at a temperature comprised between 40 and 65°C.

The diary-free alternatives for milk are homogenized at a pressure comprised between 65 and 180 bar, preferably between 70 and 85 bar, more preferably at 80 bar. The homogenisation is preferably executed at a temperature comprised between 45 and 61°C, more preferably between 50 and 58°C, more preferably between 52 and 58°C, most preferably between 54 and 56°C. The homogenisation at said temperatures changes the physicochemical characteristics, as a result of which the diary-free alternative has a fine particle size and improved rheologic characteristics. Moreover, the homogenisation offers an improved conservation by the storage-stable characteristics.

In another and further embodiment, the homogenisation comprises two steps, wherein the homogenisation in the first step is executed at a pressure between 65 and 180 bar, and the second step is executed at a pressure between 10 and 50 bar. The two-step homogenisation is preferably executed at a temperature comprised between 40 and 65°C, more preferably between 45 and 61°C, more preferably between 50 and 58°C, more preferably between 52 and 58°C, most preferably between 54 and 56°C. The homogenisation of the diary-free alternative for milk is desired at some variants for obtaining an improved soft and smooth texture.

Homogenisation according to convention methods, known by the skilled worker, are energy efficient. On the other hand, the homogenisation by means of an ultrasound treatment is more time-efficient and less energy-efficient.

According to one of the embodiments in the present invention, after the homogenisation, a cooling step is executed.

For the fermentation, the diary-free alternative is cooled to a temperature comprised between about 20 and 50°C, more preferably between 35 and 45°C. Also, according to a method in the present invention, this decrease in temperature has the advantage that the ferment can also be added, and the fermentation step can start. This method excludes an additional heating or cooling step, which is energy-efficient and time-efficient.

According to an embodiment, the fermentation is preceded by the addition of a culture.

According to the present invention, the culture or the ferment comprises one or more living organisms, that is a yeast or a bacterium, causing a fermentation via the production of enzymes. The ferment is preferably diary-free. Preferably, the ferment comprises one or more bacteria, wherein the bacterium can be used in any form, such as for example frozen or lyophilized, or from a fresh, diary-free culture. The use of a bacterium or a yeast culture is energetically much more efficient than the addition of chemically synthesized enzymes. Moreover, the biologic method offers the possibility to form biologically more complex structures.

According to an embodiment, the culture is selected from the group of *Streptococcus thermophilus, Streptococcus cremoris, Streptococcus lactis* en *Lactococcus bulgaricus, Lactobacullus casei, Lactobacillus acidophilus,* or a combination thereof.

Preferably, the culture comprises *Streptococcus thermophilus* or *Lactococcus bulgaricus.* According to an embodiment, the culture is *Streptococcus thermophilus.* These bacteria transform the sugars present in the diary-free alternative into an organic acid. Preferably, the organic acids L(+) are isomers, so that they can be broken off fast and easily in the human body, which enhances the digestibility of the diary-free, fermented desert. During the fermentation, bacterial growth takes place and enzymes are produced, modifying the degree of acidity, taste, flavour, appearance and shelf life of the diary-free alternative. The modifying physicochemical and sensory characteristics are desired for obtaining the diary-free, fermented desert.

According to a preferred embodiment, the fermentation is executed to a pH comprised between 3.7 and 5.5. Preferably, the fermentation process is executed to a pH between 4.1 and 4.8, most preferably to a pH of 4.4.
At least one bacterium as specified above is preferably added in such an amount that the pH value of the diary-free alternative decreases until it reaches values lower than or equal to 5 within a period varying between 1 and 20 hours and more preferably of 2 to 15 hours, wherein 3 to 10 hours is in particular preferred. More preferably, such an amount of at least one bacterium is added to the diary-free alternative that the pH value within the above-mentioned periods is lower than or equal to 4.6, wherein said value is more preferably lower than or equal to 4.4. In a particularly preferred embodiment, the pH value of the diary-free alternative decreases to values lower than or equal to 4.4 within a period varying between 4 and 8 hours.

During the fermentation process, the natural sugars which are present in the diary-free alternative are transformed to organic acid. Consequently, the pH of the diary-free alternative decreases. During the fermentation process, the density of the diary-free alternative is also modified. From a certain degree of acidity, the diary-free, fermented desert has its characteristic properties, namely a fresh, not too acid taste. Also, the effectiveness of the added micro-organisms decreases, and the continuation of the fermentation process is unfavourable for on the one hand the quality of the product and on the other hand the costs and energy-efficiency of the process.

According to an embodiment, the diary-free alternative has a vegetable origin, and the diary-free alternative for milk is chosen from the group of almond milk, almond paste, cashew milk, macadamia milk, oat milk, oat syrup, rice milk, spelt milk, sorghum milk, hemp milk, quinoa milk, buckwheat milk, soy milk, coconut milk, coconut cream, coconut water or a combination thereof.

The method of the present invention uses extracts of nuts, such as the non-limiting example coconut, almond, cashew, macadamia, and of grains, such as the non-limiting example spelt, sorghum, soy, rice and buckwheat. Other nuts, such as pecan nuts, hazelnuts, walnuts, beech nuts, pistachio nuts and chestnuts can also be a base for a diary-free alternative for milk. The diary-free alternatives each have their specific taste, flavour and dolour which can also be seen in the desert. The processing of these diary-free alternatives in a fermented desert results in a large choice of fermented deserts based on diary-free alternatives, having a strong and soft taste and a smooth and solid structure.

According to an embodiment, the diary-free, fermented desert comprises at least a mixture of coconut cream and coconut water. According to another embodiment, the diary-free, fermented desert comprises at least a mixture of coconut cream and water.

The coconut cream comprises 100% coconut, wherein this coconut comprises a fat content comprised between 18 and 26 m%, more preferably 24 m%.

Preferably, the diary-free, fermented desert is produced based on a mixture of coconut cream and coconut water. Coconut cream comprises less water than coconut milk, consequently coconut cream has a thicker, more pasteous consistency compared to the liquid coconut milk. Coconut water comprises the clear liquid inside the coconut. Coconut water is rich of amino acids, vitamins and minerals and offers a lot of health advantages. The combination of the smooth, pasteous coconut cream with the nutrient-rich coconut water results according to the present method in the soft, smooth texture of the fermented desert.

According to a preferred embodiment, an excess of coconut cream is provided relative to coconut water.

An excess of coconut cream relative to coconut water contributes to the soft, smooth texture of the fermented desert.

According to an embodiment, the ratio of coconut cream to coconut water is comprised between 6:1 and 1:1.

Preferably, an excess of coconut cream is provided relative to coconut water. Preferably, the ratio of coconut cream to coconut water is comprised between 5:1 and 1:1, more preferably between 4:1 and 1:1, more preferably between 3:1 and 1:1, more preferably between 2:1 and 1:1. These ratios give the desert the strong coconut taste and result in the soft and smooth texture of the desert. According to an embodiment, the ratio of coconut cream to coconut water is 1:1. According to an embodiment, the ratio of coconut cream to water is 1:1.

According to an embodiment, the desert further comprises a stabilizer, a sweetener, a fruit mash and/or one or more flavourings such as a natural flavouring or herbs.

Stabilizers are means that are capable, in the first place, of binding water. Remover of unbound water increases the viscosity of the desert. Most thickeners are linear or branched macromolecules, amongst other things polysaccharides, or starch, or proteins, which are capable of interacting by entering in intermolecular interactions such as hydrogen bindings, hydrophobic interactions or ionic relations. Stabilizers further comprise E400 alginic acid, E401 sodium alginate, E402 kalium alginate, E403 ammonium alginate, E404 calcium alginate, E405 propylene glycol alginate, E406 agar agar, E407 carrageenan, E410 locus bean gum, E412 guar gum, E413 tragacanth, E414 Arabic gum, E415 xanthan, E416 Karaya (Indian tragacanth), E417 tara gum, E418 gellan, E440 pectin, E440ii amided pectin, E460 microcrystalline cellulose, E461 methyl cellulose, E462 ethyl cellulose, E463 hydroxypropyl cellulose, E465 methyl ethyl cellulose, E466 carboxymethyl cellulose, or a combination thereof. Preferably, pectin is added to the homogenized diary-free alternative. Pectin give the desert the correct texture properties, which is the soft, smooth texture. Moreover, pectin is an easily available and cheap product for obtaining the desired properties of the desert. Preferably, starch is added to the homogenized diary-free alternative. According to an embodiment of the present invention, pectin and starch are added as a stabilizer to the homogenised diary-free alternative. The binding capacity of pectin and starch causes the soft and smooth texture of the diary-free desert.

The sweetening agent can comprise saccharides such as for example sucrose, glucose, fructose, polydextrose, powder sugar or combinations thereof, as well as polyols such as for example mannitol, maltitol, isomalt, xylitol or erythritol. The naturally present sugars give the desert its characteristic taste.

The term natural flavour should be interpreted as defined in EEG directive 88/388 of June, 22nd of 1988 and relates to a flavour which is directly derived from an agent or preparation occurring in an animal or vegetable product. This natural flavour can be of a variety of natures such as a fruit flavour (strawberry, pear, citrus, etc.), an herbal flavour such as for example cinnamon, or vegetable flavours such as vanilla. The herbal flavouring can also be intensified by the addition of fresh herbs such as for example cinnamon. The taste of the desert can further be supplemented with a sweetening agent, such as a natural flavouring or an herbal flavouring. As a result, the consumer can choose from an assortment of deserts with different tastes. The provision of different tastes allows to satisfy the consumes with a different preference of taste.

Moreover, a fruit mash can be provided in the desert, wherein the fruit mash preferably comprises at least 50% of fruit, more preferably, the fruit mash comprises at least 60% of fruit, more preferably at least 70% of fruit, most preferably at least 80% of fruit. The fruit mash according to the present invention can comprise a marmalade, a jelly, a jam, a coulis, a compote. The fruit mash of the present invention can also comprise small pieces of fresh fruit. Non-limiting examples of tastes of the fruit mash are cherry, plum, blueberry, strawberry, peach, pineapple, mango, raspberry, blackberry, passion fruit, banana, or a combination thereof.

The combination of pectin, starch, fruit mash and flavouring give the diary-free, fermented desert the taste and texture characteristics, as desired by the consumer, namely a strong taste and a pleasant mouthfeel emphasizing the quality of the product.

In a further embodiment, the desert comprises fibres and proteins of diary-free origin.

Preferably, use is made of a protein powder of peas. The pea protein has a neutral taste and does not modify the organoleptic characteristics of the desert. The pea protein, such as legumin, has similar characteristics to the casein protein in milk and improves the rheologic characteristics of the desert. A soy protein can also be added to the desert, but is chosen to a lesser degree by the consumer because of the genetic modifications of the soy plants.

Soluble and/or insoluble fibres are added to the desert and improve, when consuming the desert, to the health of the consumer.

In a further or other embodiment, oils and fats of vegetable origin are added.

According to a non-limiting example, coconut oil is added. The coconut oil gives the desert its typical taste, but also contributes to the smooth texture of the desert. According to another non-limiting example, a diary-free, fermented desert is produced base on oat syrup.

According to an embodiment, the desert is a diary-free yoghurt, soft curd cheese or curd cheese.

The present invention provides for a method for producing a fermented, diary-free desert, wherein the desert is a diary-free yoghurt, a soft curd cheese or a curd cheese. The method allows to produce yoghurt, soft curd cheese or curd cheese with a strong, smooth taste and a creamy, solid texture based on a diary-free alternative for milk.

In a second aspect, the invention relates to a diary-free, fermented desert based on a diary-free alternative for milk, wherein the diary-free alternative for milk has a vegetable origin chosen from the group of almond milk, almond paste, cashew milk, macadamia milk, oat milk, oat syrup, rice milk, spelt milk, sorghum milk, hemp milk, quinoa milk, bucket wheat milk, soy milk, coconut milk, coconut cream, coconut water, or a combination thereof, wherein the desert is composed of the diary-free alternative for at least 14% and wherein the pH is comprised between 4.1 and 4.8.

The texture of the diary-free, fermented desert according to the present invention is smooth, homogeneous, creamy without a granular or sandy structure.

According to an embodiment, the desert has a viscosity comprised between 1.5 and 6 cm per 30 seconds measured according to a Bostwick method at a temperature comprised between 4 and 7°C.

Preferably, the desert has a viscosity comprised between 2 and 5.5 cm per 30 seconds measured according to the Bostwick method at a temperature comprised between 4 and 7°C. The Bostwick method is executed with a Bostwick consistometer, known by the skilled worker. The measurement of viscosity is known by the skilled worker. Viscosity can also be measured by means of an outflow cup, wherein the time the desert needs to flow out of the cup under the influence of its own weight is measured and calculated for determining the viscosity.

The viscosity of the desert is part of the sensory qualities of the desert, more in particular the texture, and is crucial for the popularity of the desert under consumers. The two-step treatment during the thermisation according to the present invention stabilizes the diary-free alternative of milk to such a degree that the desert gives the appropriate smooth and soft texture and is also easy to spoon out.

According to a preferred embodiment, the desert comprises coconut cream, coconut water and a stabilizer, characterized in that the desert comprises a minimum of 25% of coconut cream.

The present invention comprises an amount of coconut cream comprised between 15 and 60%. This amount of coconut cream contributes to the strong, smooth taste of the fermented desert. The stabilizer, preferably pectin, contributes to the solidity of the diary-free fermented desert.

According to an embodiment, the desert is produced according to the method described in the present invention.

The method of the present invention results in a soft, smooth fermented desert. Moreover, the desert is characterized by a lower content of solids, and a longer shelf life. The choice of the consumer is indeed influenced by amongst other things the texture and the mouthfeel of the product, to which these unique product characteristics contribute.

## Claims

1. A method for the production of a diary-free fermented dessert, wherein the dessert is produced based on a diary-free alternative for milk, and the method comprises the homogenisation, the thermisation and the fermentation of the diary-free alternative, **characterized in that**, the thermisation is a two-step treatment, wherein, in a first step, the dairy-free alternative is heated to a temperature which is minimal 95°C, and in a second step, is cooled to a minimum temperature of 30°C.

2. The method of claim 1, **characterized in that**, the thermisation is executed before the fermentation.

3. The method of claim 1 or 2, **characterized in that**, the fermentation is executed before the thermisation.

4. The method of any one of the previous claims 1 to 3, **characterized in that**, the temperature of the two-step treatment in the first step is comprised between 90 and 99°C, and in the second step is comprised between 30 and 50°C.

5. The method of any one of the previous claims 1 to 4, **characterized in that**, the homogenisation is performed at a pressure comprised between 65 and 180 bar.

6. The method of any one of the claims 1 to 5, **characterized in that**, after the homogenisation, a cooling step is executed.

7. The method of any one of the previous claims 1 to 6, **characterized in that**, the fermentation is preceded by the addition of a culture, wherein the culture is selected from the group of *Streptococcus thermophilus, Streptococcus cremoris, Streptococcus lactis* en *Lactococcus bulgaricus, Lactobacullus casei, Lactobacillus acidophilus,* or a combination thereof.

8. The method of any one of the previous claims 1 to 7, **characterized in that**, the fermentation is executed until the diary-free, fermented dessert has a pH comprised between 3.7 and 5.5.

9. The method of any one of the previous claims 1 to 8, **characterized in that** the diary-free alternative for milk is of vegetable origin selected from the group of almond milk, almond paste, cashew milk, macadamia milk, oat milk, oat syrup, rice milk, spelt milk, sorghum milk, hemp milk, quinoa milk, bucket wheat milk, soy milk, coconut milk, coconut cream, coconut water or a combination thereof.

10. The method of any one of the previous claims 1 to 9, **characterized in that**, the diary-free, fermented dessert comprises at least a mixture of coconut cream and coconut water.

11. The method of any one of the previous claims 1 to 10, **characterized in that**, the ratio of coconut cream and coconut water is between 6:1 and 1:1.

12. The method of any one of the previous claims 1 to 11, **characterized in that**, the desert is a dairy-free yoghurt, soft curd cheese or curd cheese.

13. A diary-free, fermented dessert based on a diary-free alternative for milk, wherein the diary-free alternative for milk of vegetable origin is selected from the group of almond milk, almond paste, cashew milk, macadamia milk, oat milk, oat syrup, rice milk, spelt milk, sorghum milk, hemp milk, quinoa milk, bucket wheat milk, soy milk, coconut milk, coconut cream, coconut water, or a combination thereof, wherein the dessert comprises at least 14% of the diary-free alternative and wherein the pH is comprised between 4.1 and 4.8.

14. The fermented dessert of claim 13, **characterized in that**, the dessert has a viscosity comprised between 1.5 and 6 cm per 30 seconds measured according to a Bostwick method at a temperature comprised between 4 and 7°C.

15. The fermented dessert of claim 13 or 14, **characterized in that**, the dessert comprises coconut cream, coconut water and a stabilizer, wherein the dessert comprises a minimum of 25% of coconut cream.

16. The fermented dessert of any one of the claims 13 to 15, **characterized in that**, the dessert is produced according to any one of the previous claims 1 to 12.
